# EUROPÄISCHE PATENTSCHRIFT

(11) **EP 3 826 795 B1**
(45) Veröffentlichungstag und Bekanntmachung des Hinweises auf die Patenterteilung: **23.02.2022**
(21) Anmeldenummer: 19816593.8
(22) Anmeldetag: 02.12.2019
(51) Int. Cl.: B23K 11/04, B23K 11/36

(54) **VORRICHTUNG UND VERFAHREN ZUM STUMPFSCHWEISSEN VON WERKSTÜCKEN**
APPARATUS AND METHOD FOR BUTT-WELDING WORKPIECES
DISPOSITIF ET PROCÉDÉ DE SOUDAGE BOUT À BOUT DE PIÈCES

(30) Priorität: 04.12.2018 DE 102018130769
(43) Veröffentlichungstag der Anmeldung: 02.06.2021
(73) Patentinhaber: August Strecker GmbH & Co. KG Elektro-Schweissmaschinen Fabrik, 65549 Limburg (DE)
(72) Erfinder: STOCK, Michael, 65550 Limburg (DE)
(74) Vertreter: Müller, Eckhard
(86) Internationale Anmeldenummer: PCT/EP2019/083349
(87) Internationale Veröffentlichungsnummer: WO 2020/114980

(56) Entgegenhaltungen:
- DE-A1- 2 541 022
- US-A- 3 400 240

## Beschreibung

Die Erfindung betrifft eine Vorrichtung zum Stumpfschweißen von Werkstücken nach dem Oberbegriff des Anspruchs 1 Die Gattung ist der DE2541022 zu entnehmen. Die Erfindung betrifft auch ein entsprechendes Verfahren .

Es ist gattungsgemäß bekannt, Werkstücke, insbesondere die Enden von Drähten, Strängen oder Profilen mittels entsprechender Stumpfschweiß-Vorrichtungen zu verbinden. Die Verbindung der Werkstücke erfolgt dann durch ein, vorzugsweise automatisches, Stumpfschweißen, so dass ein Werkstück gewünschter Länge entsteht.

Bei den bekannten Vorrichtungen werden die Enden von beispielsweise Drähten stirnseitig aneinandergeschweißt. Die Vorrichtung weist hierzu in der Regel zwei gegeneinander verfahrbare Klemmbacken auf, in welche die Drahtenden eingespannt werden. Sodann werden die Klemmbacken mit den Drahtenden aufeinander zubewegt und der Schweißvorgang wird eingeleitet. Beim Verschweißen wird dann das Material der Drahtenden gestaucht und es bilden sich an der Schweiß- bzw. Nahtstelle Grate.

Diese Grate können beispielsweise mittels einer hobelartigen Vorrichtung entfernt werden.

Bei dem zu schweißenden Material handelt es sich oft um Betonrippen-Stähle, aber auch andere Materialqualitäten können so verbunden werden, wie hoch kohlenstoffhaltige oder legierte Stähle sowie nichteisenhaltige Werkstoffe, wie Kupfer, Aluminium oder deren Legierungen.

Je nach Qualitäten sind verschiedene Glühoptionen möglich, einschließlich programmierbarer Mikroprozessor-Steuerung des Schweiß- und Glühvorgangs, oder natürlich auch regelbare Infrarot-Pyrometer.

Ebenfalls bekannt sind sogenannte Doppelstauch-Stumpfschweiß-Vorrichtungen mit Entgratautomatik. Durch das doppelte Stauchen entsteht eine exzellente Schweißqualität. Nahezu alles erwärmte, flüssig gewordene Material wird aus der Verbindung herausgepresst. Auf diese Weise entsteht eine Schweißung extrem hoher Festigkeit. Die in den Ablauf integrierte Entgratautomatik liefert durchmessergleiche Schweißstellen im Vergleich zum Originalmaterial. Zudem ist das Risiko von Drahtbrüchen durch übermäßiges Entgraten nahezu unterbunden. Mit anderen Worten bilden wiederholgenaue, exakt reproduzierbare, durchmessergleiche Schweißverbindungen höchster Qualität auch bei schwierigem Material eine solide Grundlage für die weiteren Produktionsabläufe.

Ferner ist aus der DE 21 43 917 A1 eine Widerstands-Stumpfschweißmaschine zum Schweißen von Seilen unter Verwendung eines die Seilenden umgreifenden Keramikrohres bekannt, wobei zwischen Spannvorrichtungen für die zu verschweißenden Seilenden eine das einteilige oder geteilte Keramikrohr beim Schweißen unverrückbar umfassende Halterung angeordnet ist.

Aus der DE 29 34 423 A1 ist ein Verfahren zum elektrischen Stumpfschweißen von metallischen Leitern in Form von Drähten oder Strängen bekannt, wobei die zu verbindenden Enden der metallischen Leiter mit Endquerschnitt stumpfgeschweißt werden und die Verbindungsstelle des strumpfgeschweißten Leiters bei erhöhter Temperatur aufgestaucht wird. Anschließend wird der vergrößerte Querschnitt der Stauchzone durch Kaltverformen auf den Endquerschnitt reduziert.

Auch aus der DE 28 39 537 A1 ist eine Vorrichtung zum Zuführen und automatischen Stumpfschweißen von Eisendrähten bekannt, wobei mit Anschlägen versehene Stütz- und Führungsorgane für den Vorschub der Eisendrähte paarweise angeordnet sind. Greifmittel halten die Enden der Eisendrähte und ermöglichen die nachfolgende Bewegung der in den Spannbacken der Vorrichtung blockierten Eisendrähte. Ferner sind Mittel zum Ausstoßen des verschweißten Eisendrahtes vorgesehen.

Die DE 1 130 541 A1 betrifft ein Verfahren und eine Vorrichtung zum stirnseitigen Widerstands-Abbrenn-Stumpfschweißen von Bandenden und anschließendem Bearbeiten der Nahtstelle durch schrittweises Transportieren des Bandes in stationäre Bearbeitungsstationen.

Nachteilig bei bekannten Vorrichtungen zum Stumpfschweißen von Werkstücken, beispielsweise von Drähten, Strängen oder Profilen ist, dass beim Entgraten des verschweißten Grats an der Schweißstelle bei unterschiedlichen geometrischen Größen in der Fügeebene oder im Wesentlichen parallel zu dieser, beispielsweise den Drahtdurchmessern bzw. Profilhöhen der zu verbindenden Drähte bzw. Profile Beschädigungen am Werkstück sowie am Entgratwerkzeug auftreten können. Dies kann insbesondere dann der Fall sein, wenn das Entgratwerkzeug von der Seite her auf den Grat an der Schweißstelle einwirkt, die den kleineren Drahtdurchmesser aufweist. Denn beim Entgraten wird die Entgratöffnung entsprechend des Drahtdurchmessers eingestellt. Für den Fall, dass sich das Entgratwerkzeug von der Seite mit dem kleineren Drahtdurchmesser der zu entgratenden Schweißstelle nähert, ist also die Entgratöffnung gegenüber dem Draht mit dem größeren Durchmesser zu gering eingestellt. Folglich kommt es zu Beschädigungen dieses Drahtes mit größerem Durchmesser sowie auch des Entgratwerkzeugs selbst, da die voreingestellte Öffnung nicht korrekt eingestellt ist. Auch können ungewünschte Gratreste an der Schweißstelle zurück bleiben.

In der Regel wird bei bekannten Vorrichtungen der an der Schweißstelle entstehende Grat beim Zusammenfügen stets von rechts entfernt wird. Aus diesem Grund ist die rechte Klemmbacke der Vorrichtung beweglich ausgestaltet, um den auf der rechten Seite der Vorrichtung eingelegten Draht beim Schweißvorgang nachzuführen. Die Klemmbacke mit dem Draht auf der linken Seite ist feststehend. Da es für den Bediener der Vorrichtung, der die Drähte einlegt, mit bloßem Auge nicht zu erkennen ist, welcher der Drähte möglicherweise einen geringfügig größeren oder kleineren Drahtdurchmesser aufweist, kommt es häufig vor, dass das Entgratwerkzeug von der Seite her auf die zu entgratende Schweißstelle einwirkt, welche den kleineren Drahtdurchmesser aufweist. Dadurch kommt es dann zu den oben beschriebenen Beschädigungen am Werkstück und am Werkzeug.

Ausgehend von den zuvor beschriebenen Nachteilen liegt der Erfindung die Aufgabe zugrunde eine Vorrichtung und ein Verfahren zum Stumpfschweißen bereitzustellen, die diese Nachteile vermeidet.

Diese Aufgabe wird gelöst mit einer Stumpfschweißvorrichtung nach Anspruch 1 und mit einem Verfahren zum Stumpfschweißen nach Anspruch 7.

### Darstellung der Erfindung

Die Erfindung betrifft eine Stumpfschweißvorrichtung zum Stumpfschweißen, insbesondere zum Doppelstauch-Widerstandspressstumpfschweißen von Werkstücken, insbesondere von Drähten, Strängen und Profilen, umfassend erste und zweite Klemmmittel zur Aufnahme der zu fügenden Enden der Werkstücke, wobei wenigstens ein Klemmmittel zwischen einer Ausgangsposition und einer Schweißposition verschiebbar ist, und wobei jeweils ein Entgratwerkzeug zum Entgraten der verschweißten Werkstückenden an einem Klemmmittel angeordnet ist.

Jedem dieser Klemmmittel ist ein festzuspannendes Werkstück, beispielsweise ein Draht zugeordnet. Die Klemmmittel sind gegeneinander zwischen der Ruheposition und der Schweißposition, beispielsweise mittels eines Antriebes verfahrbar, so dass die eingespannten Werkstückenden aufeinander zubewegt werden können, bis diese zusammenstoßen. Nachdem die Werkstückenden in den jeweiligen Randbereichen durch den Schweißstrom erhitzt worden sind, werden die Klemmmittel erneut gegeneinander verfahren, wobei sich die Drahtenden verbinden und sich um die Schweißnaht bzw. Verbindungsstelle herum ein Grat bildet. Dieser Grat ist mittels der Entgratwerkzeuge zu entfernen. Erfindungsgemäß ist wenigstens ein Sensor zur Bestimmung der geometrischen Größen der zu fügenden Werkstücke, insbesondere des Durchmessers, der Breite oder der Höhe, in der Fügeebene oder im Wesentlichen parallel zu dieser vorgesehen, wobei eine Steuereinrichtung die Bewegung der Klemmmittel und/oder eines der Entgratwerkzeuge in Abhängigkeit der geometrischen Größe steuert.

Die Klemmmittel oder die Entgratwerkzeuge werden mittels Steuereinrichtung derart angesteuert , dass der bereits verschweißte Draht in Abhängigkeit von den geometrischen Größen von der linken bzw. rechten Seite der Schweißstelle entgratet wird. Insbesondere soll der Draht von der Seite mit der größeren geometrischen Größen, insbesondere mit dem größeren Drahtdurchmesser, entgratet werden. Dadurch wird dann eine Beschädigung sowohl des Drahtes als auch des Entgratwerkzeuges weitestgehend vermieden.

Gemäß einer ersten vorteilhaften Weiterbildung der Erfindung ist der wenigstens eine Sensor als Wegmesssensor ausgebildet.

Mit einem Wegmesssensor wird der Weg zwischen einem Objekt, beispielsweise dem Klemmmittel und einer Referenzposition, beispielsweise an einer ortsfesten Stelle der Vorrichtung gemessen. Wegmesssensoren können zusätzlich zur Wegmessung für die Dimensionsmessung zur Bestimmung der Höhe, Dicke und Breite eines Werkstücks verwendet werden. Je nach Anforderungsbereich können die Messungen mithilfe von Licht oder magnetischen Feldern bzw. Schallwellen oder in direktem Kontakt mit dem Werkstück durchgeführt werden. Auf diese Weise ist eine einfach durchzuführende und genaue Messung einer geometrischen Größe des Werkstücks möglich. Insbesondere kann ausgehend von der gemessenen Größe eine geometrische Größe des Werkstücks, beispielsweise der Durchmesser eines Drahtes, hinreichend exakt bestimmt und an die Steuereinrichtung übermittelt werden.

Der Sensor kann an einer Aufnahme für die Klemmmittel an der Vorrichtung angeordnet sein, insbesondere seitlich oben an einem sogenannten Backenträger.

In einer weiteren vorteilhaften Ausgestaltung der Erfindung ist vorgesehen, dass jeweils ein Entgratwerkzeug zusammen mit dem jeweiligen Klemmmittel bewegbar ist. Auf diese Weise kann das Entgratwerkzeug gemeinsam mit dem Klemmmittel bewegt werden, so dass keine zusätzlichen Antriebe für die Bewegung des Entgratwerkzeugs, insbesondere parallel zum Werkstück notwendig sind.

Es kann also vorgesehen sein, dass das Entgratwerkzeug abhängig vom Klemmmittel in Bewegungsrichtung des Klemmmittels verfahrbar ist. Denkbar ist alternativ aber auch, dass das Entgratwerkzeug unabhängig vom Klemmmittel in Bewegungsrichtung des Klemmmittels verfahrbar ist. Hierdurch entstehen mehr Freiheitsgrade für die Bewegung des Entgratwerkzeugs.

Insbesondere zum Nachstellen des Entgratwerkzeugs, insbesondere eines am Entgratwerkzeug angeordneten Entgratmessers, sieht eine weitere vorteilhafte Ausgestaltung der Erfindung vor, dass das Entgratwerkzeug einstellbar an einem, gegebenenfalls mit dem Klemmmittel verbundenen, Halter aufgenommen ist. Auf diese Weise kann das Entgratwerkzeug nachgestellt werden, wenn es beispielsweise Abnutzungen aufweist, die dazu beitragen würden, dass die für das Entgraten benötigten Eigenschaften des Entgratwerkzeugs, beispielsweise die Klingenschärfe des Entgratmessers, nicht mehr ausreichend sind.

Gemäß einer weiteren vorteilhaften Ausgestaltung der Erfindung weist jedes Klemmmittel jeweils zwei axial verstellbare Klemmbacken auf, zwischen denen das Werkstück einklemmbar ist. Zwischen diesen Klemmbacken wird jeweils ein Draht, insbesondere das Ende eines Drahtes, eingespannt und zusammen mit dem Klemmmittel verfahren, so dass die eingespannten Drahtenden aneinanderstoßen und schließlich miteinander verschweißt werden können. Vorteilhafterweise können die Klemmmittel, insbesondere die Klemmbacken zusätzlich auch zur Stromführung dienen, das heißt, der für den Schweißvorgang benötigte Strom kann mittels der Klemmbacken in die zu fügenden Werkstücke eingeleitet werden.

Um das Einlegen der Werkstücke in die Vorrichtung zu erleichtern, kann ein Anschlag zum Anordnen und zum Ausrichten wenigstens eines der Werkstücke in der Vorrichtung vorgesehen sein. Insoweit kann das erste Werkstück zunächst in die Vorrichtung eingelegt und gegen den Anschlag ausgerichtet werden. Auf diese Weise ist das Werkstück dann exakt in der Vorrichtung positioniert. Anschließend kann der Anschlag entfernt, beispielsweise zurückgezogen werden, so dass er nicht mehr in Kontakt mit dem Werkstück steht. Schließlich kann das weitere zu fügende Werkstück in die Vorrichtung eingelegt werden, wobei das bereits in der Vorrichtung eingelegte Werkstück als Anschlag zum Einlegen und Anordnen dienen kann.

Nach einem eigenständigen Gedanken der Erfindung ist ein Verfahren zum Stumpfschweißen, vorzugsweise zum Doppelstauch-Widerstandspressstumpfschweißen von Werkstücken, insbesondere von Drähten, Strängen und Profilen, insbesondere mit einer Stumpfschweißvorrichtung, gekennzeichnet durch folgende Schritte:
a) Einlegen der miteinander zu verbindenden Werkstücke in eine Stumpfschweißvorrichtung,
b) Verbringen der zu verbindenden Enden der Werkstücke an die Schweißstelle,
c) Bestimmung wenigstens einer geometrischen Größe der Werkstücke, insbesondere des Durchmessers, der Breite oder der Höhe, in der Fügeebene oder im Wesentlichen parallel zu dieser vor dem Stumpfschweißen,
d) Stumpfschweißen der Endquerschnitte der zu verbindenden Enden der Werkstücke,
e) Aufstauchen der Schweißstelle des stumpfgeschweißten Werkstückes bei erhöhter Temperatur zur Herbeiführung einer wesentlichen Querschnittsvergrößerung,
f) Reduzierung des vergrößerten Querschnitts auf einen vorgegebenen Endquerschnitt des Werkstücks mittels eines Entgratwerkzeugs und
g) Ansteuern wenigstens eines der Entgratwerkzeuge in Abhängigkeit von den geometrischen Größen der miteinander zu fügenden Werkstücke.

Gemäß einer ersten vorteilhaften Ausgestaltung des erfindungsgemäßen Verfahrens kommt bei unterschiedlichen geometrischen Größen der miteinander zu verbindenden Werkstücke das Entgratwerkzeug zum Einsatz, das dem Werkstück mit der größeren geometrischen Größe zugeordnet ist. Darüber hinaus wird die Entgrathöhe bzw. die Entgratöffnung auf diese größere geometrische Größe, beispielsweise den größeren Durchmesser eines Drahtes, eingestellt. Es kommt also das der größeren geometrischen Größe zugeordnete Entgratwerkzeug mit der entsprechend korrekt eingestellten Entgratöffnung zum Einsatz. Auf diese Weise können Beschädigungen des Entgratwerkzeugs oder des Drahtes weitestgehend vermieden werden.

Für den Fall, dass es keinen signifikanten Unterschied der relevanten geometrischen Größen der zu fügenden Werkstücke gibt, weist die Steuerung standardmäßig eines der Entgratwerkzeug zum Entgraten an, beispielsweise stets die rechte Seite. Denn diese Seite ist bei den aus dem Stand der Technik bekannten Vorrichtungen zum Entgraten vorgesehen, also den Bedienern der Vorrichtungen bekannt.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung.

Dabei zeigen zum Teil schematisch:
- Figur 1: die Stumpfschweißvorrichtung mit zwei Klemmmitteln ohne eingelegte Werkstücke,
- Figur 2: die Vorrichtung gemäß Figur 1 mit eingelegten Werkstücken, wobei das Werkstück mit vergleichsweise größerem Durchmesser sich auf der rechten Seite der Vorrichtung befindet,
- Figur 3: die Vorrichtung gemäß Figur 2, wobei das Werkstück mit vergleichsweise größerem Durchmesser sich auf der linken Seite der Vorrichtung befindet,
- Figur 4: die Vorrichtung gemäß Figur 2 in einer Detailansicht,
- Figur 5: Verfahrensschritte a) bis j) zum Stumpfschweißen von Werkstücken in einer ersten Anordnung und
- Figur 6: Verfahrensschritte a) bis j) zum Stumpfschweißen von Werkstücken in einer zweiten Anordnung.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

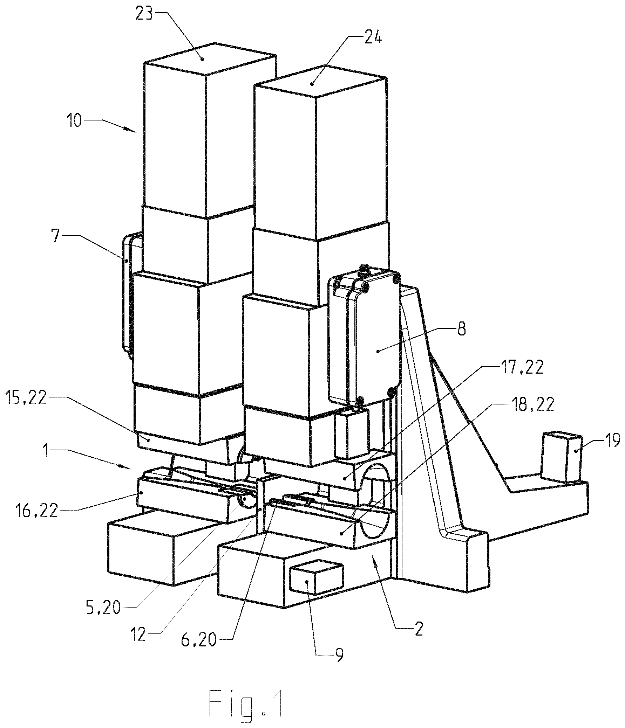

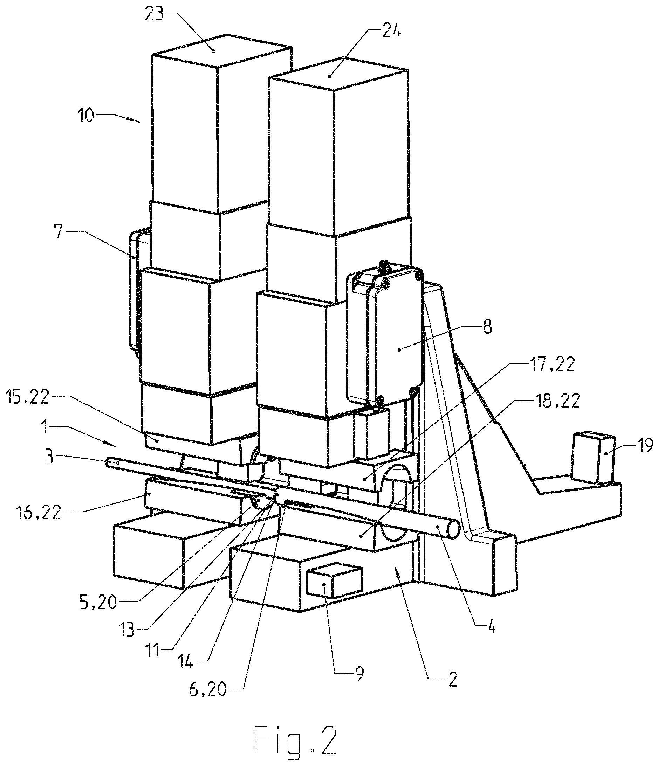

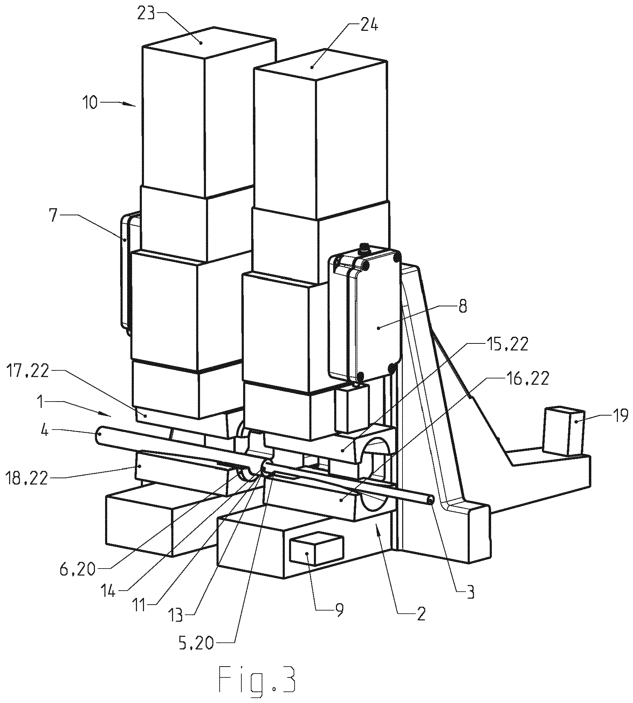

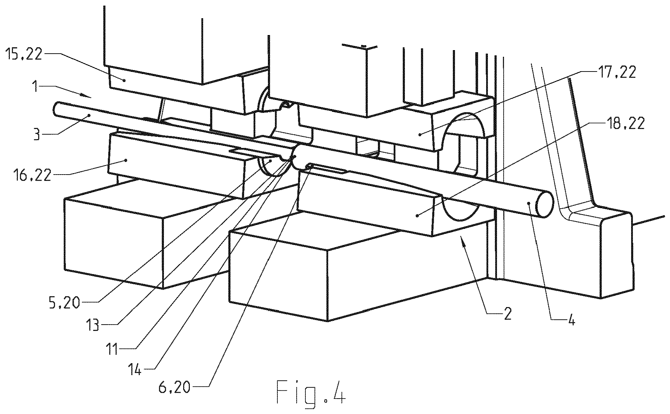

Figur 1 zeigt ein Stumpfschweißvorrichtung 10 ohne eingelegte Werkstücke 3, 4. Als Werkstücke 3, 4 für die Durchführung des erfindungsgemäßen Verfahrens mit einer erfindungsgemäßen Vorrichtung 10 gemäß der Figuren 2 bis 6 dienen beispielsweise Drahtleiter 3, 4 bzw. Drähte. Diese werden beispielsweise von einem Vorratscoil abgezogen und den hydraulisch oder pneumatisch relativ zueinander axial verstellbaren Klemmbacken 15, 16, 17, 18 eines ersten und eines zweiten Klemmmittels 1, 2, die auch der Stromzuführung dienen können, zugeführt.

Jedem dieser Klemmmittel 1, 2 mit den Klemmbacken 15, 16, 17, 18 ist ein Draht 3, 4, insbesondere ein Draht- bzw. Werkstückende 13, 14 zugeordnet, welches mittels der Klemmmittel 1, 2 festgespannt wird. Die Klemmmittel 1, 2 sind gegeneinander zwischen der Ruheposition und der Schweißposition, beispielsweise mittels eines Antriebes 9, verfahrbar, so dass die eingespannten Drahtenden 13, 14 horizontal aufeinander zubewegt werden können, bis die Drahtenden 13, 14 zusammenstoßen. Natürlich kann es in einer nicht gezeigten Ausführungsform alternativ vorgesehen sein, dass die Klemmmittel 1, 2 derart ausgerichtet angeordnet sind, dass diese in vertikaler Richtung verfahrbar sind.

Mit Hilfe der Klemmbacken 15, 16, 17, 18 erfolgt in an sich bekannter Weise (DE-OS 25 41 022) das Stumpfschweißen der zuvor sauber geschnittenen miteinander zu verbindenden Drahtenden 13, 14 der Drähte 3, 4. Der beim Schweißen entstehende Schweißgrat 21 wird ebenfalls in an sich bekannter Weise (DE-OS 25 41 022) durch die Relativverschiebung der Klemmbacken 15, 16, 17, 18 mit daran angeordneten Entgratwerkzeugen 5, 6 entfernt.

Nach dem Stumpfschweißen erfolgt die Aufstauchung der Verbindungs- bzw. Schweißstelle 11 bei erhöhter Temperatur von beispielsweise wenigstens 450° C zur Herbeiführung einer um beispielsweise wenigstens 40 % betragenden Querschnittsvergrößerung.

Der für den Schweißvorgang notwendige Schweißstrom kann mittels der an den Klemmmitteln 1, 2 jeweils angeordneten Klemmbacken 15, 16, 17, 18 in den Draht 3, 4 eingeleitet werden.

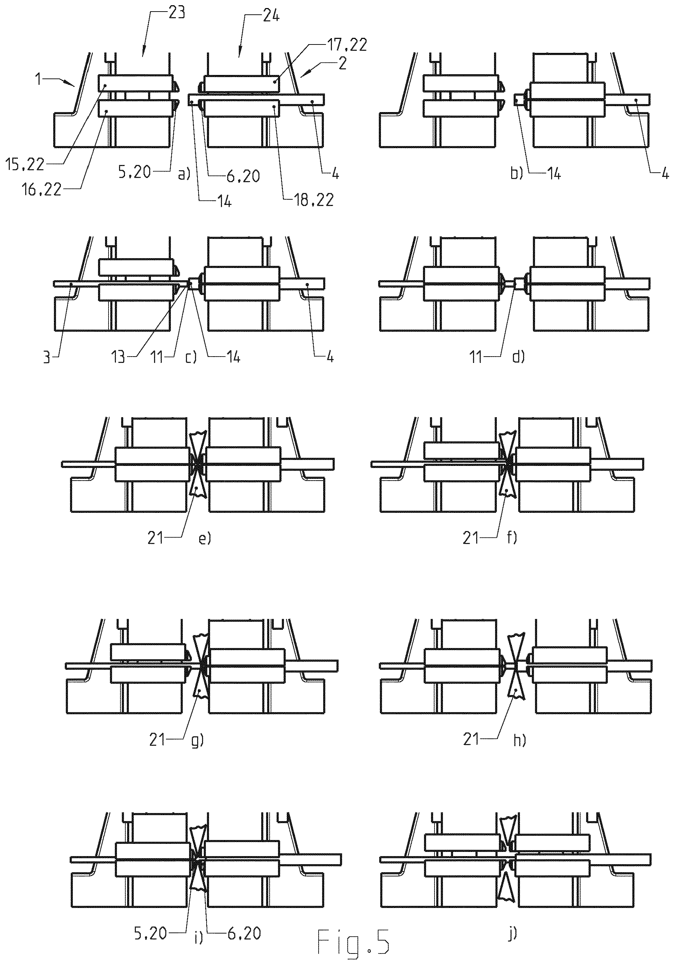

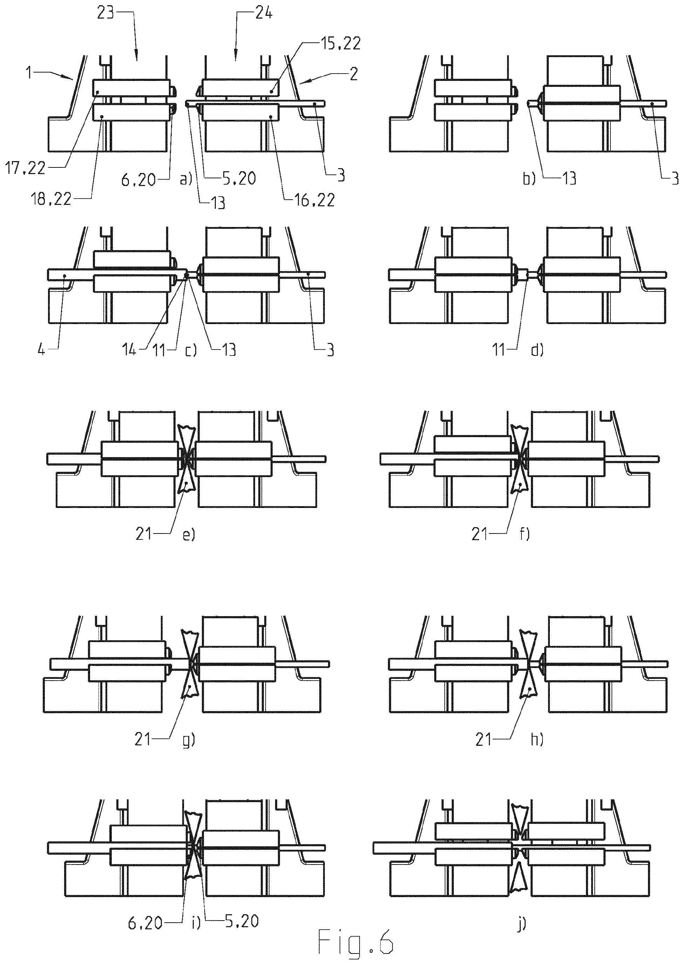

Nachdem die Drahtenden 13, 14 in den Randbereichen durch den Schweißstrom erhitzt worden sind, werden die Klemmmittel 1,2 erneut gegeneinander verfahren, wobei sich die Drahtenden 13, 14 verbinden und sich um die Schweißnaht bzw. Verbindungsstelle 11 herum ein Schweißgrat 21 bildet. Die einzelnen Verfahrensschritte werden in den Fig. 5 und 6 ausführlich beschrieben.

Die Entgratwerkzeuge 5, 6 werden durch jeweils an den Klemmmittel 1, 2 angeordnete Messerträger 22 mit daran angeordneten Entgratmessern 20 gebildet. Die Entgratwerkzeuge 5, 6 werden vorliegend mittels Schrauben an den Klemmmitteln 1, 2 befestigt. Die Messerträger 22 sind zusammen mit den Klemmmitteln 1, 2 im Wesentlichen parallel zur Drahtrichtung über die Schweißnaht bzw. Verbindungsstelle 11 verfahrbar.

Für den Fall, dass das Entgratwerkzeug 5, 6, wie im Stand der Technik, völlig unabhängig von den geometrischen Größen der Werkstücke 3, 4 stets nur von einer Seite her über die Schweißnaht 11 bewegt wird, entstehen die Nachteile, welche durch die erfindungsgemäße Vorrichtung und das erfindungsgemäße Verfahren gelöst werden. Denn bevor das Entgratwerkzeug 5, 6 mittels Steuereinrichtung 19 den Entgratvorgang startet, wird durch Sensoren 7, 8 wenigstens eine geometrische Größe der zu fügenden Werkstücke 3, 4 in der Fügeebene oder im Wesentlichen parallel zu dieser bestimmt.

Im vorliegenden Ausführungsbeispiel wird der Durchmesser der zu fügenden Drähte 3, 4 mittels der Sensoren 7, 8 bestimmt. Denkbar ist aber auch die Bestimmung der Breite oder Höhe in der Fügeebene oder im Wesentlichen parallel zu dieser, insbesondere bei Profilteilen.

Bei den verwendeten Sensoren 7, 8 kann es sich um ein Wegmesssystem handeln, welches eine Wegstrecke potentiometrisch, optisch oder mechanisch, zum Beispiel mittels Seilzug, misst. Auch ist denkbar, einen Weggeber einzusetzen, der aus einem mit einer Reihe feinster Striche versehenen Glasstab besteht, die optisch abgetastet werden.

Mittels dieser Sensoren 7, 8 wird die geometrische Größe der Werkstücke 3, 4 in der Fügeebene oder im Wesentlichen parallel zu dieser bestimmt. Beispielsweise kann mittels der Sensoren 7, 8 der zum Einspannen der Werkstücke 3, 4 benötigte Abstand der jeweils zugeordneten Klemmbacken 15, 16, 17, 18 gemessen werden, so dass dann aus diesen Daten der Durchmesser des jeweiligen Drahtes 3, 4 bestimmt werden kann. Die Genauigkeit dieser Messung kann bei etwa 1/10 mm liegen.

Der Sensor 7, 8 ist vorliegend seitlich und oben an einem sogenannten Backenträger, d.h. an einer Aufnahme der Vorrichtung 10 für die Klemmmittel 1, 2 angeordnet, wie aus den Figuren 1 bis 3 hervorgeht.

Insbesondere zum Nachstellen des Entgratwerkzeugs 5, 6, beispielsweise des am Entgratwerkzeug 5, 6 angeordneten Entgratmessers 20, ist das Entgratwerkzeug 5, 6 einstellbar an einem, gegebenenfalls mit dem Klemmmittel 1, 2 verbundenen, Halter bzw. Messerträger 22 aufgenommen. Auf diese Weise kann das Entgratwerkzeug 5, 6 nachgestellt werden, wenn es beispielsweise Abnutzungen aufweist, die dazu beitragen würden, dass die für das Entgraten benötigten Eigenschaften des Entgratwerkzeugs 5, 6, beispielsweise die Klingenschärfe des Entgratmessers 20, nicht mehr ausreichend sind.

Nachfolgend werden die Verfahrensschritte zum Stumpfschweißen von Werkstücken 3, 4 anhand der Figuren 5 und 6 erläutert.

Aus Figur 5 a) bis j) gehen die Verfahrensschritte zum Stumpfschweißen von zwei Drähten 3, 4 hervor, wobei im vorliegenden Ausführungsbeispiel der auf der linken Seite 23 in die Vorrichtung 10 eingelegte Draht 3 im Vergleich zum Draht 4, welcher auf der rechten Seite 24 eingelegt wird, einen geringeren Durchmesser aufweist.

Im Einzelnen laufen beim vorliegenden Stumpfschweißen der Drähte 3, 4 folgende Schritte ab: Fig. 5 a) Einlegen des ersten Drahtes 4 in die Vorrichtung 10, b) Festlegen des Drahtes 4 mittels der Klemmbacken 15, 16 des ersten Klemmmittels 1. Anschließend wird gemäß Schritt c) der zweite Draht 3 in die Vorrichtung 10 eingelegt und im Schritt d) mittels Klemmbacken 17, 18 festgespannt.

Danach findet gemäß Fig. 5 e) in an sich bekannter Weise der Schweißvorgang statt. Anschließend wird die Schweißstelle in den Schritten e) bis h) freigegeben, damit der Entgratvorgang stattfinden kann.

Nachdem mittels der Sensoren 7,8 festgestellt wurde, dass im vorliegenden Ausführungsbeispiel der rechts 24 eingelegte Draht 4 gegenüber dem weiteren Draht 2 den vergleichsweise größeren Durchmesser aufweist, geben die Sensoren 7, 8 ein entsprechendes Signal an die Steuereinrichtung 19. Sodann wird das der rechten Seite 24 der Vorrichtung 10, also der Seite mit dem größeren Drahtdurchmesser, zugeordnete Klemmmittel 2 verfahren, um den Entgratvorgang auszuführen, wie durch Fig. 5 i) gezeigt wird.

Schließlich geben die Klemmmittel 1, 2 den verschweißten Draht frei, vgl. Fig. 5 h).

In ähnlicher Weise läuft das Stumpfschweißen für den Fall ab, dass der Draht 3 mit dem größeren Drahtdurchmesser auf der linken 23 statt der rechten Seite 24 der Vorrichtung 10 eingesetzt wird. Insoweit entsprechen die Verfahrensschritte der Fig. 6 a) bis f) denen der Fig. 5 a) bis f).

Anschließend erfolgt gemäß Figur 6 f) bis i) das Entgraten. Da der Draht 3 mit dem größeren Drahtdurchmesser auf der linken Seite 23 der Vorrichtung 10 eingelegt wurde, findet das Entgraten von der linken Seite 23 her statt, wie aus Fig. 6 g) bis i) hervorgeht. Schließlich wird auch bei diesem Ausführungsbeispiel der verschweißte Draht 3, 4 freigegeben und kann entnommen werden, vgl. Fig. 6 j).

Natürlich kann es auch vorkommen, dass die miteinander zu verschweißenden Drähte 3, 4 keine, oder lediglich unbedeutende Unterschiede hinsichtlich ihrer geometrischen Größe, insbesondere des Drahtdurchmessers aufweisen. In diesem Fall findet das Entgraten stets von der rechten Seite 24 der Vorrichtung stattfinden. Es kann selbstverständlich auch vorgesehen sein, dass alternativ standardmäßig die linke Seite 23 angesteuert wird.

In den Ausführungsbeispielen gemäß Fig. 5 und 6 wurde der erste Draht 4 zunächst auf der rechten Seite 24 der Vorrichtung 10 eingelegt. Im Sinne der Erfindung ist es aber auch denkbar, dass der erste Draht 3, 4 zunächst auf der linken Seite 23 der Vorrichtung 10 eingelegt wird. Die Verfahrensschritte gemäß Fig. 5 und 6 würden in diesem Fall entsprechend analog ablaufen.

### Bezugszeichenliste

- 1: Erstes Klemmmittel
- 2: Zweites Klemmmittel
- 3: Werkstück
- 4: Werkstück
- 5: Entgratwerkzeug
- 6: Entgratwerkzeug
- 7: Sensor
- 8: Sensor
- 9: Antrieb
- 10: Vorrichtung
- 11: Schweißstelle
- 12: Anschlag
- 13: Werkstückende
- 14: Werkstückende
- 15: Klemmbacke
- 16: Klemmbacke
- 17: Klemmbacke
- 18: Klemmbacke
- 19: Steuereinrichtung
- 20: Entgratmesser
- 21: Schweißgrat
- 22: Messerträger
- 23: linke Seite
- 24: rechte Seite

## Patentansprüche

1. Stumpfschweißvorrichtung (10) zum Stumpfschweißen, insbesondere zum Doppelstauch-Widerstandspressstumpfschweißen von Werkstücken (3, 4), insbesondere von Drähten, Strängen und Profilen, umfassend erste (1) und zweite Klemmmittel (2) zur Aufnahme der zu fügenden Enden (13, 14) der Werkstücke (3, 4), wobei wenigstens ein Klemmmittel (1, 2) zwischen einer Ausgangsposition und einer Schweißposition verschiebbar ist, und wobei jeweils ein Entgratwerkzeug zum Entgraten der verschweißten Werkstückenden (13, 14) an einem Klemmmittel (1, 2) angeordnet ist, **dadurch gekennzeichnet, dass** wenigstens ein Sensor (7, 8) zur Bestimmung der geometrischen Größen der zu fügenden Werkstücke (3, 4), insbesondere des Durchmessers, der Breite oder der Höhe, in der Fügeebene oder im Wesentlichen parallel zu dieser vorgesehen ist, wobei eine Steuereinrichtung (19) die Bewegung der Klemmmittel (1, 2) und/oder eines der Entgratwerkzeuge (5, 6) in Abhängigkeit der geometrischen Größe steuert und wobei entweder das Entgratwerkzeug (5, 6) abhängig vom Klemmmittel (1, 2) in Bewegungsrichtung des Klemmmittels (5, 6) verfahrbar ist, und die Steuereinrichtung (19) die Bewegung der Klemmmittel (1, 2) steuert, oder das Entgratwerkzeug (5, 6) unabhängig vom Klemmmittel (1, 2) in Bewegungsrichtung des Klemmmittels (5, 6) verfahrbar ist, und die Steuereinrichtung (19) die Bewegung des Entgratwerkzeugs (5, 6) steuert.

2. Vorrichtung (10) nach Anspruch 1, **dadurch gekennzeichnet, dass** der wenigstens eine Sensor (7, 8) als Wegmesssensor ausgebildet ist.

3. Vorrichtung (10) nach Anspruch 1 oder 2, **dadurch gekennzeichnet, dass** die Entgratwerkzeuge (5, 6) zusammen mit dem jeweiligen Klemmmittel (1, 2) bewegbar sind.

4. Vorrichtung (10) nach Anspruch 1 bis 3, **dadurch gekennzeichnet, dass** die Entgratwerkzeuge abhängig vom jeweiligen Klemmmittel in Bewegungsrichtung des Klemmmittels verfahrbar sind.

5. Vorrichtung (10) nach einem der Ansprüche 1 bis 4, **dadurch gekennzeichnet, dass** die Entgratwerkzeuge jeweils einstellbar an einem, gegebenenfalls mit dem Klemmmittel verbundenen, Halter aufgenommen sind.

6. Vorrichtung (10) nach einem der vorherigen Ansprüche, **dadurch gekennzeichnet, dass** jedes Klemmmittel (1, 2) jeweils zwei axial verstellbare Klemmbacken (15, 16, 17, 18) aufweist, zwischen denen das Werkstück (3, 4) einklemmbar ist.

7. Verfahren zum Stumpfschweißen, vorzugsweise zum Doppelstauch-Widerstandspressstumpfschweißen von Werkstücken (3, 4), insbesondere von Drähten, Strängen und Profilen, mit einer Stumpfschweißvorrichtung nach einem der vorherigen Ansprüche, mit folgenden Schritten:
a) Einlegen der miteinander zu verbindenden Werkstücke (3, 4) in eine Stumpfschweißvorrichtung,
b) Verbringen der zu verbindenden Enden (13, 14) der Werkstücke (3, 4) an die Schweißstelle (11),
c) Bestimmung wenigstens einer geometrischen Größe der Werkstücke (3, 4), insbesondere des Durchmessers, der Breite oder der Höhe, in der Fügeebene oder im Wesentlichen parallel zu dieser vor dem Stumpfschweißen,
d) Stumpfschweißen der Endquerschnitte der zu verbindenden Enden (13, 14) der Werkstücke (3, 4),
e) Aufstauchen der Schweißstelle (11) des stumpfgeschweißten Werkstückes (3, 4) bei erhöhter Temperatur zur Herbeiführung einer wesentlichen Querschnittsvergrößerung,
f) Reduzierung des vergrößerten Querschnitts auf einen vorgegebenen Endquerschnitt des Werkstücks (3, 4) mittels eines Entgratwerkzeugs (5, 6) und
g) Ansteuern wenigstens eines der Entgratwerkzeuge (5, 6) in Abhängigkeit von den geometrischen Größen der miteinander zu fügenden Werkstücke (3, 4).

8. Verfahren nach Anspruch 7, wobei bei unterschiedlichen geometrischen Größen der miteinander zu verbindenden Werkstücke (3, 4) das Entgratwerkzeug (5, 6) zum Einsatz kommt, das dem Werkstück (3, 4) mit der größeren geometrischen Größe zugeordnet ist.

9. Verfahren nach einem der Ansprüche 7 oder 8 wobei wenigstens ein Klemmmittel (1, 2) unabhängig vom Entgratwerkzeug (5, 6) bewegt wird.

## Claims

1. Butt-welding apparatus (10) for the butt welding, in particular for the double-upset resistance pressure butt welding, of workpieces (3, 4), in particular of wires, strands and profiles, comprising first clamping means (1) and second clamping means (2) for receiving the ends (13, 14) to be joined of the workpieces (3, 4), wherein at least one clamping means (1, 2) can be displaced between a starting position and a welding position, and wherein a respective deburring tool for deburring the welded-together workpiece ends (13, 14) is arranged on a clamping means (1, 2), **characterized in that** at least one sensor (7, 8) for determining the geometric sizes of the workpieces (3, 4) to be joined, in particular the diameter, the width or the height, in the joining plane or substantially parallel to the joining plane is provided, wherein a control device (19) controls the movement of the clamping means (1, 2) and/or of one of the deburring tools (5, 6) on the basis of the geometric size, and wherein either the deburring tool (5, 6) can be moved in dependence on the clamping means (1, 2) in the movement direction of the clamping means (5, 6), and the control device (19) controls the movement of the clamping means (1, 2), or the deburring tool (5, 6) can be moved independently of the clamping means (1, 2) in the movement direction of the clamping means (5, 6), and the control device (19) controls the movement of the deburring tool (5, 6).

2. Apparatus (10) according to Claim 1, **characterized in that** the at least one sensor (7, 8) is in the form of a travel measuring sensor.

3. Apparatus (10) according to Claim 1 or 2, **characterized in that** the deburring tools (5, 6) can be moved together with the respective clamping means (1, 2).

4. Apparatus (10) according to Claims 1 to 3, **characterized in that** the deburring tools can be moved in dependence on the respective clamping means in the movement direction of the clamping means.

5. Apparatus (10) according to one of Claims 1 to 4, **characterized in that** the deburring tools are respectively received in a settable manner on a mount, which is optionally connected to the clamping means.

6. Apparatus (10) according to one of the preceding claims, **characterized in that** each clamping means (1, 2) has two axially adjustable clamping jaws (15, 16, 17, 18), between which the workpiece (3, 4) can be clamped in.

7. Method for the butt welding, preferably for the double-upset resistance pressure butt welding, of workpieces (3, 4), in particular of wires, strands and profiles, having a butt-welding apparatus according to one of the preceding claims, said method having the following steps:
a) placing the workpieces (3, 4) to be connected to one another in a butt-welding apparatus,
b) bringing the ends (13, 14) to be connected of the workpieces (3, 4) together at the welding point (11),
c) determining at least one geometric size of the workpiece (3, 4), in particular the diameter, the width or the height, in the joining plane or substantially parallel to the joining plane prior to the butt-welding operation,
d) butt welding the end cross sections of the ends (13, 14) to be connected of the workpieces (3, 4),
e) upsetting the welding point (11) of the butt-welded workpiece (3, 4) at an elevated temperature to bring about a significant enlargement in cross section,
f) reducing the enlarged cross section to a predefined end cross section of the workpiece (3, 4) by means of a deburring tool (5, 6), and
g) actuating at least one of the deburring tools (5, 6) on the basis of the geometric sizes of the workpieces (3, 4) to be joined to one another.

8. Method according to Claim 7, wherein, given different geometric sizes of the workpieces (3, 4) to be connected to one another, the deburring tool (5, 6) assigned to the workpiece (3, 4) with the larger geometric size is used.

9. Method according to either of Claims 7 and 8, wherein at least one clamping means (1, 2) is moved independently of the deburring tool (5, 6).

## Revendications

1. Dispositif de soudage bout à bout (10) pour le soudage bout à bout, en particulier pour le soudage bout à bout par résistance à double refoulement de pièces (3, 4), en particulier de fils, de cordons et de profilés, comprenant un premier (1) et un deuxième moyen de serrage (2) pour la réception des extrémités à joindre (13, 14) des pièces (3, 4), au moins un moyen de serrage (1, 2) pouvant être déplacé entre une position de départ et une position de soudage, et un outil d'ébavurage pour l'ébavurage des extrémités de pièce soudées (13, 14) étant agencé sur un moyen de serrage (1, 2), **caractérisé en ce qu'**au moins un capteur (7, 8) est prévu pour déterminer les dimensions géométriques des pièces à joindre (3, 4), en particulier le diamètre, la largeur ou la hauteur, dans le plan du joint ou essentiellement parallèlement à celui-ci, un appareil de commande (19) commandant le déplacement des moyens de serrage (1, 2) et/ou d'un des outils d'ébavurage (5, 6) en fonction de la taille géométrique, et soit l'outil d'ébavurage (5, 6) pouvant être déplacé en fonction du moyen de serrage (1, 2) dans la direction de déplacement du moyen de serrage (5, 6), et l'appareil de commande (19) commandant le déplacement des moyens de serrage (1, 2), soit l'outil d'ébavurage (5, 6) pouvant être déplacé indépendamment du moyen de serrage (1, 2) dans la direction de déplacement du moyen de serrage (5, 6), et l'appareil de commande (19) commandant le déplacement de l'outil d'ébavurage (5, 6).

2. Dispositif (10) selon la revendication 1, **caractérisé en ce que** l'au moins un capteur (7, 8) est configuré en tant que capteur de mesure de déplacement.

3. Dispositif (10) selon la revendication 1 ou 2, **caractérisé en ce que** les outils d'ébavurage (5, 6) peuvent être déplacés conjointement avec le moyen de serrage respectif (1, 2).

4. Dispositif (10) selon les revendications 1 à 3, **caractérisé en ce que** les outils d'ébavurage peuvent être déplacés en fonction du moyen de serrage respectif dans la direction de déplacement du moyen de serrage.

5. Dispositif (10) selon l'une quelconque des revendications 1 à 4, **caractérisé en ce que** les outils d'ébavurage sont respectivement reçus de manière réglable sur un support, éventuellement relié au moyen de serrage.

6. Dispositif (10) selon l'une quelconque des revendications précédentes, **caractérisé en ce que** chaque moyen de serrage (1, 2) présente respectivement deux mâchoires de serrage (15, 16, 17, 18) ajustables axialement, entre lesquelles la pièce (3, 4) peut être serrée.

7. Procédé de soudage bout à bout, de préférence de soudage bout à bout par résistance à double refoulement, de pièces (3, 4), en particulier de fils, de cordons et de profilés, avec un dispositif de soudage bout à bout selon l'une quelconque des revendications précédentes, comprenant les étapes suivantes :
a) la mise en place des pièces (3, 4) à relier entre elles dans un dispositif de soudage bout à bout,
b) l'amenée des extrémités à relier (13, 14) des pièces (3, 4) à l'emplacement de soudage (11),
c) la détermination d'au moins une dimension géométrique des pièces (3, 4), en particulier du diamètre, de la largeur ou de la hauteur, dans le plan du joint ou essentiellement parallèlement à celui-ci avant le soudage bout à bout,
d) le soudage bout à bout des sections transversales d'extrémité des extrémités à relier (13, 14) des pièces (3, 4),
e) le refoulement de l'emplacement de soudage (11) de la pièce (3, 4) soudée bout à bout à température élevée pour provoquer un agrandissement important de la section transversale,
f) la réduction de la section transversale agrandie à une section transversale d'extrémité prédéterminée de la pièce (3, 4) au moyen d'un outil d'ébavurage (5, 6) et
g) la commande d'au moins un des outils d'ébavurage (5, 6) en fonction des dimensions géométriques des pièces (3, 4) à joindre entre elles.

8. Procédé selon la revendication 7, dans lequel, en cas de dimensions géométriques différentes des pièces (3, 4) à relier entre elles, l'outil d'ébavurage (5, 6) qui est associé à la pièce (3, 4) présentant la plus grande dimension géométrique est utilisé.

9. Procédé selon l'une quelconque des revendications 7 ou 8, dans lequel au moins un moyen de serrage (1, 2) est déplacé indépendamment de l'outil d'ébavurage (5, 6).
